# EUROPEAN PATENT APPLICATION

(11) **EP 4 679 855 A1**
(43) Date of publication of application: **14.01.2026**
(21) Application number: 24767136.5
(22) Date of filing: 05.03.2024
(51) Int. Cl.: H04N 25/78, H04N 25/772

(54) **IMAGING ELEMENT**

(30) Priority: 06.03.2023 JP 2023033771
(71) Applicant: NIKON CORPORATION, Tokyo 140-8601 (JP)
(72) Inventor: SARUWATARI Osamu, Tokyo 140-8601 (JP)
(74) Representative: Hoffmann Eitle
(86) International application number: PCT/JP2024/008250
(87) International publication number: WO 2024/185769

(57) **Abstract**

An image sensor includes: a storage unit that stores a signal which is read out from a pixel; a shift register that transfers the signal stored in the storage unit by a supplied clock signal; a clock signal propagation circuit that propagates the clock signal via a plurality of inverters connected in series to each other; and a load circuit that matches a load of a first inverter which supplies the clock signal to the shift register among the plurality of inverters with a load of a second inverter which supplies the clock signal to the first inverter among the plurality of inverters.

## Description

### TECHNICAL FIELD

The present invention relates to an image sensor.

Priority is claimed on Japanese Patent Application No. 2023-033771, filed on March 6, 2023, the contents of which are incorporated herein by reference.

### BACKGROUND

An image sensor capable of processing signals output from a plurality of pixels in parallel is known (for example, Patent Document 1). Conventionally, there has been a problem of an increase in a consumption current caused by parallel processing of the signals output from the pixels.

### [Related Art Documents]

### [Patent Documents]

[Patent Document 1]
PCT International Publication No. WO 2013 / 129202

### SUMMARY OF THE INVENTION

An aspect of the present invention is an image sensor including: a storage unit that stores a signal which is read out from a pixel; a shift register that transfers the signal stored in the storage unit by a supplied clock signal; a clock signal propagation circuit that propagates the clock signal via a plurality of inverters connected in series to each other; and a load circuit that matches a load of a first inverter which supplies the clock signal to the shift register among the plurality of inverters with a load of a second inverter which supplies the clock signal to the first inverter among the plurality of inverters.

### BRIEF DESCRIPTION OF DRAWINGS

FIG. 1 is a schematic view showing the configuration of an image sensor of the present embodiment.
FIG. 2 is a view showing an example configuration of a pixel unit circuit included in a pixel array and a data bus circuit provided on a peripheral circuit in the present embodiment.
FIG. 3 is a timing chart showing an example of an operation in which the pixel unit circuit measures an exposure electric charge amount in the present embodiment.
FIG. 4 is a view showing a flow of an operation in which the data bus circuit reads out AD conversion result data from the pixel unit circuit in the present embodiment.
FIG. 5 is a schematic view showing an example configuration of the data bus circuit in the present embodiment.
FIG. 6 is a view showing a detailed configuration of a clock repeater circuit in an image sensor of the present embodiment.
FIG. 7 is a view showing an example configuration of a conventional clock repeater circuit.
FIG. 8 is a view showing an example of a change in a duty ratio of a clock signal when a clock repeater circuit having a conventional configuration is constituted of an inverter having a small size.

### DESCRIPTION OF THE EMBODIMENTS

Hereinafter, an embodiment will be described in detail with reference to the drawings.

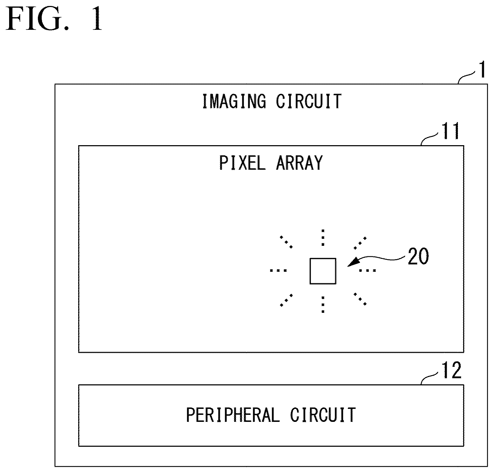

FIG. 1 is a schematic view showing the configuration of an image sensor of an embodiment. An image sensor 1 is a circuit that captures an image of a subject and is a circuit to which light emitted from the subject is input and which outputs digital image data (hereinafter, referred to as "image data") indicating the subject. The image sensor 1 includes, for example, a pixel array 11 and a peripheral circuit 12. The pixel array 11 is an aggregate of circuits (hereinafter, referred to as a "pixel unit circuit") for each pixel that constitutes a digital image. The pixel unit circuit generates a digital signal indicating a subject in a region corresponding to a pixel in an imaging range. A pixel unit circuit 20 shown in FIG. 1 schematically represents that the pixel unit circuit is provided so as to correspond to each pixel of the image data.

The peripheral circuit 12 reads out a pixel signal from each pixel unit circuit of the pixel array 11 and outputs each pixel signal that is read out to another circuit. Specifically, the peripheral circuit 12 includes a shift register and a data bus circuit that includes a clock repeater circuit. The peripheral circuit 12 sequentially reads out the pixel signal from each pixel unit circuit to the shift register by driving the shift register with a clock signal supplied by the clock repeater circuit. The peripheral circuit 12 can acquire the pixel signal from all of the pixel unit circuits included in the pixel array 11 by sequentially evacuating the pixel signal that is read out to the shift register to a memory or the like.

The peripheral circuit 12 may have a configuration that performs a predetermined process on each pixel signal that is read out from the pixel array 11 and then outputs the pixel signal. For example, the peripheral circuit 12 may have a configuration that outputs a pixel signal obtained by performing a filter process, a correction process, or the like on each pixel signal that is read out. For example, the peripheral circuit 12 may have a configuration that generates image data based on each pixel signal that is read out and outputs the generated image data.

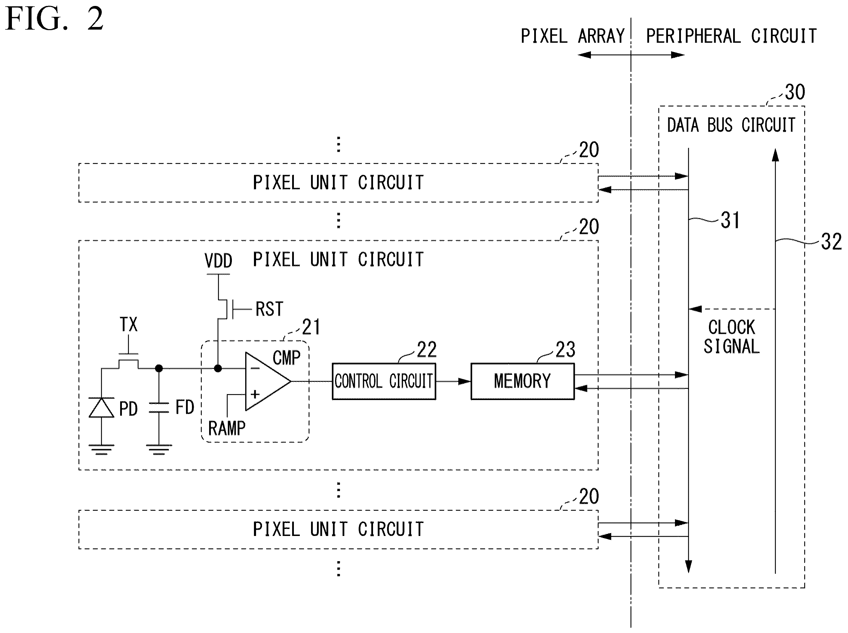

FIG. 2 is a view showing an example configuration of the pixel unit circuit included in the pixel array 11 and the data bus circuit provided on the peripheral circuit 12. The pixel unit circuit 20 includes a photodiode PD, a transfer transistor TX, a floating diffusion FD, a reset transistor RST, an electric power source VDD, an ADC (Analog-to-Digital Converter) 21, a control circuit 22, and a memory 23. The photodiode PD is a light reception element that converts light into an electric charge. The photodiode PD accumulates electric charges of an amount corresponding to the intensity of incident light. The ADC 21 includes a comparator CMP. The ADC 21 and the control circuit 22 convert the amount of electric charges generated by the exposure of the photodiode PD into a digital signal and store the digital signal in the memory 23. The memory 23 is an example of a "storage unit".

Specifically, the transfer transistor TX transfers the electric charge from the photodiode PD to the floating diffusion FD. The floating diffusion FD receives the electric charge of the photodiode PD via the transfer transistor TX and converts the electric charge into a voltage.

The reset transistor RST resets the potential of the floating diffusion FD. The VDD is an electric power source potential.

The comparator CMP outputs "1" when an inversion input potential is lower than a reference potential RAMP which is a non-inversion input. The comparator CMP outputs "0" when the inversion input potential is higher than the reference potential RAMP. The reference potential RAMP is controlled by the control circuit 22.

According to such a configuration, the control circuit 22 measures the amount (hereinafter, referred to as an "exposure electric charge amount") of electric charges generated by the exposure of the photodiode PD and stores a measurement value in the memory 23 as a pixel value. Each pixel unit circuit 20 performs such an operation, and thereby, data of the entire image is acquired. Examples of the measurement method of the exposure electric charge amount include an SS (Single Slope) method that measures a small light amount, a so-called LOFIC (Lateral Overflow Integration Capacitor) method that accumulates electric charges overflowing in the SS method to the floating diffusion FD and performs the measurement, a PFM (Pulse Frequency Modulation) method that resets the electric charge of the floating diffusion FD and measures the electric charge amount based on the number of resets, and the like. However, the measurement method of the exposure electric charge amount is not limited to a specific method. The measurement method of the exposure electric charge amount may be a hybrid method in which these methods are combined.

For example, when the amount of the incident light is large, the FD potential decreases with time since saturated electric charges of the electric charges generated in the photodiode PD overflow to the FD. When the FD potential becomes lower than the reference potential RAMP (Qth), that is, when it is detected that the output of the CMP changes from "0" to "1", the control circuit 22 resets the electric charge of the floating diffusion FD. The control circuit 22 measures the amount (hereinafter, referred to as an "exposure electric charge amount") of electric charges generated by the exposure of the photodiode PD and stores a measurement value in the memory 23 as a pixel value by counting the number of resets. Each pixel unit circuit 20 performs such an operation, and thereby, data of the entire image is acquired (PFM method).

On the other hand, when the amount of the incident light is not as much as that described above (when the amount is less than a RAMP voltage (Qth) of the PFM mode), the reference potential RAMP is changed from a low potential side to a high potential side with respect to a signal that has overflowed to the FD, and when it is detected that the output of the comparator CMP is changed from "0" to "1", the electric charge of the floating diffusion FD is reset, and the reference potential RAMP is reset to an initial value. By measuring the time when the output of the CMP is changed, the amount of electric charges generated by the exposure of the photodiode PD is measured, and a measurement value is stored in the memory 23 as a pixel value (SS method).

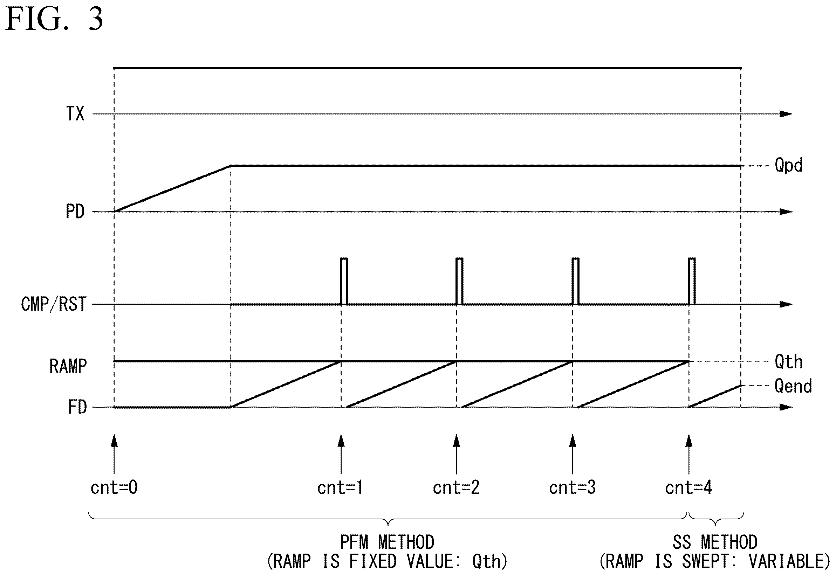

FIG. 3 is a timing chart showing an example of an operation in which the pixel unit circuit 20 measures an exposure electric charge amount by a hybrid method. In an operation example of FIG. 3, by the exposure of the photodiode PD in a period in which the transfer transistor TX is ON, a reset counter cnt is counted up from 1 to a final value of 4, and the final electric charge amount of the floating diffusion FD is Qend. In this case, based on the final value 4 of the reset counter cnt, the final electric charge amount Qend of the floating diffusion FD, a threshold value Qth for determining a reset timing of the electric charge amount of the floating diffusion FD, and an electric charge amount Qpd based on a capacitance of the photodiode PD, the control circuit 22 can calculate the exposure electric charge amount Qtx as Qtx = Qpd + 4 × Qth + Qend. That is, in the example of FIG. 3, the measurement is performed by the PFM method to the final value 4 of the reset counter cnt, and the subsequent measurement is performed by the SS method to the final electric charge amount Qend. In the PFM method, the electric charge of the floating diffusion FD is reset in response to a result of comparison in which the reference potential RAMP is fixed. In the SS method, the electric charge amount Qend is measured by sweeping the reference potential RAMP.

With reference back to FIG. 2, next, a data bus circuit 30 is described. The data bus circuit 30 includes, for example, a shift register 31 and a clock repeater circuit 32. The shift register 31 sequentially reads out data (hereinafter, referred to as "AD conversion result data") indicating a result of AD conversion from the memory 23 of each pixel unit circuit 20 while switching the memory 23 from which the data is read out in synchronization with the clock signal supplied from the clock repeater circuit 32. The clock repeater circuit 32 is connected to the shift register 31 for each pixel in a clock signal propagation direction and transmits the clock signal in the clock signal propagation direction while repeating supply and amplification of the signal. After a necessary process is performed on the AD conversion result data that is read out to the shift register 31, the AD conversion result data is recorded as each pixel value of the image data.

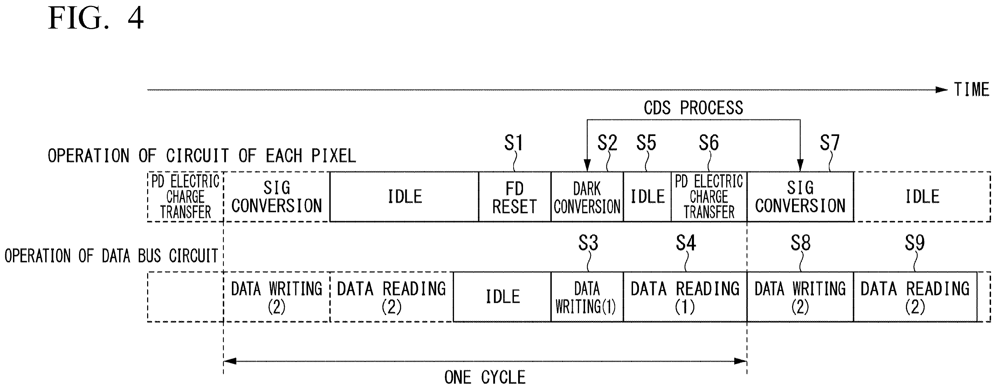

FIG. 4 is a view showing a flow of an operation in which the data bus circuit 30 reads out the AD conversion result data from the pixel unit circuit 20. The horizontal axis represents a time. FIG. 4 shows a flow of an operation when the exposure electric charge amount is measured by the PFM method at the time of a high light amount. FIG. 4 shows an operation in which Steps S1 to S9 are repeated for each reset of the floating diffusion FD, and noise reduction by a CDS (Correlated double sampling) process is performed. The noise reduction by the CDS process is realized by two operations which are a DARK conversion and a SIG conversion. The DARK conversion is an AD conversion process for measuring a potential immediately after resetting the floating diffusion FD. The SIG conversion is an AD conversion process for measuring the amount of electric charges accumulated in the floating diffusion FD after the reset. In the CDS process, by subtracting the potential measured by the DARK conversion from the potential measured by the SIG conversion, it is possible to obtain a measurement result in which the influence of noise due to a dark current is reduced.

In the CDS process, the operation of the pixel unit circuit 20 and the operation of the data bus circuit 30 are performed in parallel. An example of a specific operation of the CDS process is described.

First, the pixel unit circuit 20 turns on the reset transistor RST, and thereby, the floating diffusion FD is reset (Step S1). When the floating diffusion FD is reset, subsequently, the DARK conversion is performed by the ADC 21 (Step S2: DARK conversion).

The data bus circuit 30 supplies a clock signal for data writing to the pixel unit circuit 20 in parallel with the DARK conversion of Step S2. The clock signal for data writing is supplied to the pixel unit circuit 20, and thereby, the AD conversion result data of the DARK conversion is written in the memory 23 of the pixel unit circuit 20 (Step S3: data writing (1)). When the AD conversion result data of the DARK conversion is written in the memory 23, the data bus circuit 30 supplies a clock signal for data reading to the pixel unit circuit 20. The clock signal for data reading is supplied to the pixel unit circuit 20, and thereby, the AD conversion result data of the DARK conversion written in the memory 23 of the pixel unit circuit 20 is read out to the peripheral circuit 12 (Step S4: data reading (1)).

When the DARK conversion of Step S2 is completed, after waiting for a predetermined time until electric charges are accumulated in the photodiode PD (Step S5: IDLE), the pixel unit circuit 20 turns on the transfer transistor TX. The transfer transistor TX is turned on, and thereby, the transfer of electric charges from the photodiode PD to the floating diffusion FD is performed in parallel with the data reading of Step S4 (Step S6: PD electric charge transfer). When the electric charges are transferred from the photodiode PD to the floating diffusion FD, subsequently, in the pixel unit circuit 20, the SIG conversion is performed by the ADC 21 (Step S7: SIG conversion).

The data bus circuit 30 supplies a clock signal for data writing to the pixel unit circuit 20 in parallel with the SIG conversion of Step S7. The clock signal for data writing is supplied to the pixel unit circuit 20, and thereby, the AD conversion result data of the SIG conversion is written in the memory 23 of the pixel unit circuit 20 (Step S8: data writing (2)). When the AD conversion result data of the SIG conversion is written in the memory 23, the data bus circuit 30 supplies a clock signal for data reading to the pixel unit circuit 20. The clock signal for data reading is supplied to the pixel unit circuit 20, and thereby, the AD conversion result data of the SIG conversion written in the memory 23 of the pixel unit circuit 20 is read out to the peripheral circuit 12 (Step S9: data reading (2)).

**In** this way, in the image sensor 1 of the embodiment, since the memory 23 that stores the AD conversion result data is shared by the DARK conversion and the SIG conversion, the writing and the reading of the AD conversion result data of the DARK conversion and the SIG conversion are repeatedly performed in series. **In** the case of such a configuration, when the read time of the data becomes long, a time interval (CDS interval) between the DARK conversion and the SIG conversion becomes long, and therefore, the read noise increases. If the memory 23 is not shared, the writing and the reading of the AD conversion result data can be performed in parallel by the DARK conversion and the SIG conversion, but the degree of difficulty of constituting a circuit is increased in the configuration in which the ADC 21 is provided for each pixel unit circuit 20 as in the image sensor 1 of the present embodiment. Therefore, when the ADC 21 is provided for each pixel unit circuit 20 and the memory 23 is shared by the DARK conversion and the SIG conversion, it is required that the CDS interval does not become long as much as possible.

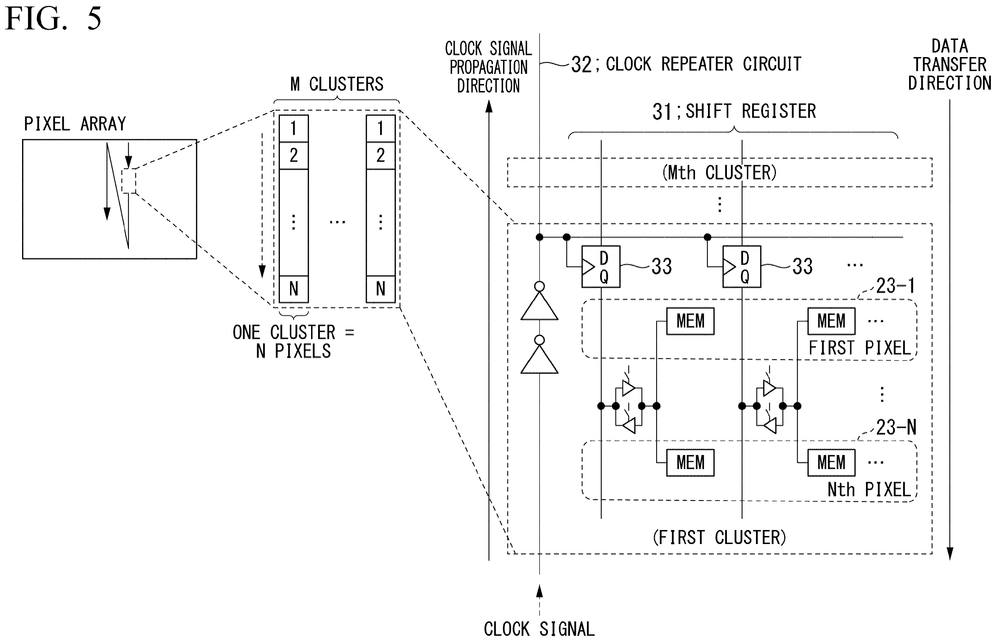

FIG. 5 is a schematic view showing an example configuration of the data bus circuit 30. FIG. 5 shows a state in which the AD conversion result data stored in each pixel of the pixel array 11 is read out to the shift register 31 for respective M clusters having a predetermined size. A cluster is an aggregate of a predetermined number of consecutive pixels. FIG. 5 represents a case in which one cluster is an aggregate of N pixels.

For example, the shift register 31 has a D flip-flop circuit 33 for the resolution (here, k bits) of the ADC 21 for each cluster, and by inputting a clock signal to the D flip-flop circuit 33 of each cluster, the shift register 31 sequentially reads out the AD conversion result data from memories 23-1 to N of N pixels in synchronization with the clock signal and reads out the data to k D flip-flop circuits 33. This operation is performed in parallel with respect to each of the M clusters.

On the other hand, the clock repeater circuit 32 has a configuration in which a first inverter 41A and a second inverter 41B are connected in series for each cluster. The first inverter 41A and the second inverter 41B of each cluster amplify the clock signals supplied from the first inverter 41A and the second inverter 41B of the cluster on a preceding stage and supply the clock signals to the shift register 31.

In general, in an electronic circuit, a capacitance component that is caused by wiring, electronic components, their physical structures, or the like and is not intended by a designer is present. Such a capacitance component is called as a parasitic capacitance, repeats charging and discharging at the time of operation of the circuit, and therefore may be a factor of a malfunction. For example, in the data bus circuit 30 shown in FIG. 5, the shift register 31, the clock repeater circuit 32, and the like have parasitic capacitances. Since the occurrence frequency of charging and discharging per unit time of the parasitic capacitance as the circuit operates at a high frequency and a high speed, a current (hereinafter, referred to as a "parasitic current") generated by the parasitic capacitance also increases as the circuit operates at a high frequency and a high speed. By the increase of the parasitic current, a voltage decrease (so-called IR drop) by a resistance component occurs, an operation voltage is decreased, and the possibility that a malfunction occurs is increased.

In the image sensor 1 of the present embodiment, the clock repeater circuit 32 includes a configuration as described below, and thereby, a malfunction by the parasitic capacitance is prevented. First, before the details of the clock repeater circuit 32 are described, the configuration of a conventional clock repeater circuit is described.

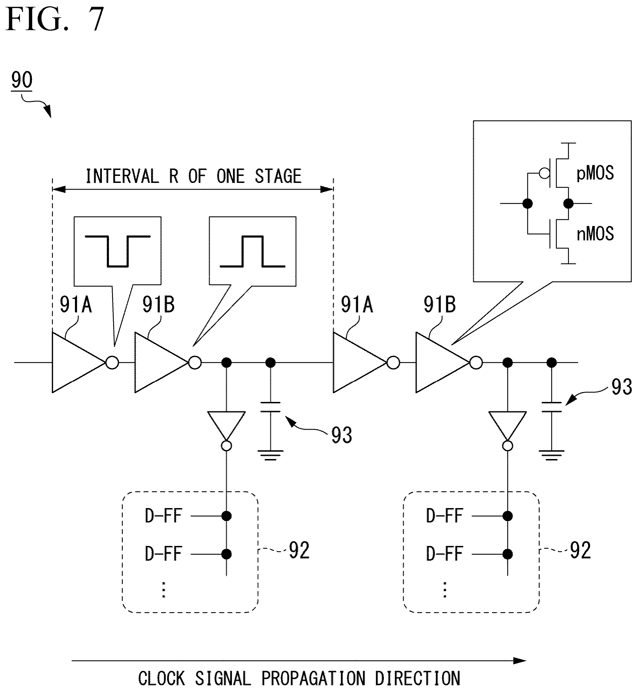

FIG. 7 is a view showing an example configuration of a conventional clock repeater circuit. As shown in FIG. 7, the conventional clock repeater circuit 90 repeats a configuration in which two inverters 91 are connected in series to be adjacent to each other and has a configuration in which a D flip-flop circuit (D-FF) 92 corresponding to one cluster is connected between the pairs of the two inverters 91 connected in series to be adjacent to each other. Hereinafter, a unit of the circuit repeated in such a repeater configuration is referred to as a "stage".

That is, in FIG. 7, one stage includes a first inverter 91A, a second inverter 91B, the D flip-flop circuit 92, and a parasitic capacitance 93. In FIG. 7, the parasitic capacitance 93 is represented by a circuit symbol of a capacitance element (a condenser or a capacitor). However, the parasitic capacitance 93 represents the capacitance component described above, and the capacitance element is not necessarily provided.

In a conventional clock repeater circuit, two inverters 91 which has a different size from each other and in which a transistor size (for example, a finger number, hereinafter also simply referred to as a "size") is large (for example, in the finger number, about several tens of fingers) are connected in series. FIG. 7 is an example in which among the first inverter 91A and the second inverter 91B connected in series to be adjacent to each other, the size of the second inverter 91B that is closer to the D flip-flop circuit 92 on a subsequent stage is made larger than the size of the first inverter 91A that is farther from the D flip-flop circuit 92. In FIG. 7, the capacitance element 93 includes a parasitic capacitance that the clock repeater circuit 90 has for each stage. Since the clock repeater circuit 90 has a repeater configuration in which the configuration of each stage is repeated, the capacitance element 93 of each stage basically has the same degree of capacitance.

In the clock repeater circuit 90, the second inverter 91B supplies the clock signal to the D flip-flop circuit 92. In this case, the first inverter 91A receives a clock signal of a non-inversion phase and outputs a clock signal of an inversion phase, and the second inverter 91B receives a clock signal of an inversion phase and outputs a clock signal of a non-inversion phase. That is, the first inverter 91A is driven by a pMOS, and the second inverter 91B is driven by a nMOS.

In this way, since the clock repeater circuit 90 having the conventional configuration is constituted by connecting two inverters 91 having a large size in series to be adjacent to each other in one stage, a gate parasitic capacitance is large, and thereby, there may be cases in which a large parasitic current occurs, and the data bus circuit malfunctions.

On the other hand, it is conceivable that inverters having a small size (for example, in the finger number, about several fingers to more than ten fingers) are connected. However, in this case, a drive force of a nMOS (negative-channel metal oxide semiconductor) and a pMOS (positive-channel metal oxide semiconductor) that constitute the inverter is decreased by the reduction of a gate size, and thereby, there may be cases in which the duty ratio of the clock signal is changed, and the data bus circuit malfunctions.

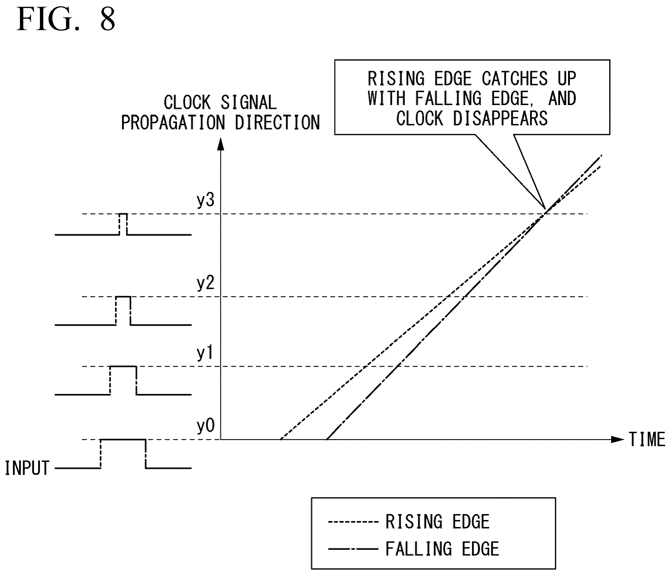

FIG. 8 is a view showing an example of a change in the duty ratio of the clock signal when the clock repeater circuit having the conventional configuration is constituted of an inverter having a small size. FIG. 8 shows, as an example, a change in the duty ratio of a clock signal of the non-inversion phase. In this case, a rising edge of an input signal is influenced by an operation speed of the nMOS of the second inverter 91B, and a falling edge is influenced by an operation speed of the pMOS of the first inverter 91A.

Generally, with respect to the pMOS and the nMOS, since the operation speed of the pMOS is faster than the operation speed of the nMOS, the difference between the rising edge and the falling edge tends to be increased in the first inverter 91A, and the difference between the rising edge and the falling edge tends to be decreased in the second inverter 91B. In the clock repeater circuit having the conventional configuration, since the second inverter 91B has a larger size and a stronger drive force than the first inverter 91A, the difference between the rising edge and the falling edge tends to be decreased as a whole. Therefore, in the clock repeater circuit, as the clock signal propagates in the propagation direction, the difference between the rising edge and the falling edge is decreased, and the time when the clock signal can be recognized as being at a high level is gradually shortened. That is, the duty ratio is gradually decreased.

For example, the example of FIG. 8 represents the case in which a duty ratio that is 50% at a position y0 (a position where an initial clock signal is input) in the propagation direction becomes smaller as the clock signal propagates, and the duty ratio becomes zero at a position y3. In other words, this can be said as a situation in which the falling edge having a fast operation speed catches up with a rising edge having a slow operation speed. In such a situation, since the clock signal cannot be correctly recognized as being at the high level after the position y0 (that is, part of the clock disappears), there is a possibility that a malfunction occurs. The possibility of such a malfunction becomes higher as the operation speed is made higher, that is, as the frequency of the clock signal is increased.

Here, when the sizes of both the first inverter 91A and the second inverter 91B are increased, since the first inverter 91A and the second inverter 91B can be operated with a sufficient drive force, the possibility that the falling edge catches up with the rising edge is decreased, but the circuit scale becomes large. On the other hand, when the sizes of the first inverter 91A and the second inverter 91B are simply decreased, the circuit scale becomes small, but the possibility that the falling edge catches up with the rising edge is increased, and the clock easily disappears.

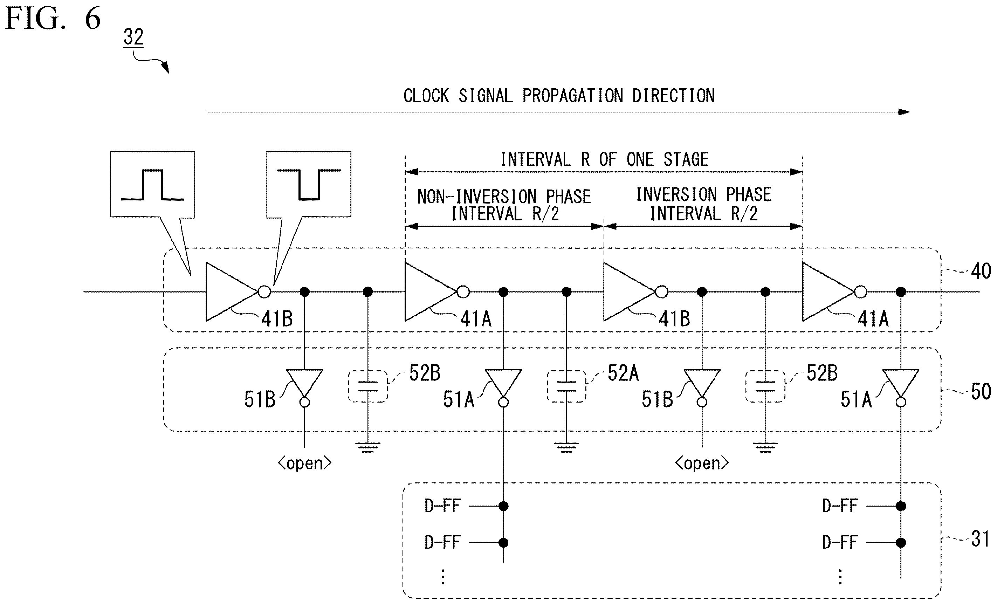

Since the image sensor 1 of the present embodiment has a configuration that includes the ADC 21 for each pixel unit circuit 20, it is desired to decrease the circuit scale with respect to the components other than the ADC 21 as much as possible, but when the size of the inverter is simply decreased in the conventional configuration, the possibility of a malfunction is increased as described above. The clock repeater circuit 32 includes a configuration as shown in FIG. 6, and thereby, the image sensor 1 of the present embodiment can solve such a problem.

FIG. 6 is a view showing a detailed configuration of the clock repeater circuit 32 in the image sensor 1 of the present embodiment. The clock repeater circuit 32 in the present embodiment includes a clock signal propagation circuit 40 that propagates a clock signal and a load circuit 50 that applies an identical load to each inverter 41 included in the clock signal propagation circuit 40.

Specifically, in the clock repeater circuit having the conventional configuration, in one stage, the magnitude of the load of the first inverter 91A and the magnitude of the load of the second inverter 91B are different from each other.

On the other hand, in the clock signal propagation circuit 40 of the present embodiment, the load circuit 50 is connected to both the first inverter 41A and the second inverter 41B within one stage and between adjacent stages.

FIG. 6 shows an example in which the shift register 31 and a first capacitance element 52A are connected in order from an output side of the first inverter 41A to an input side of the second inverter 41B, and a dummy circuit D and a second capacitance element 52B are connected in order from an output side of the second inverter 41B to an input side of the first inverter 41A. In this case, a circuit of a non-inversion phase and a circuit of an inversion phase are constituted such that a first load applied to the first inverter 41A and a second load applied to the second inverter 41B have an identical magnitude. The first load and the second load may be adjusted by the configuration of the clock signal propagation circuit 40 or may be adjusted by the configuration of the load circuit 50.

For example, the first load may be adjusted by the first capacitance element 52A, may be adjusted by the size of a first amplification element 51A connected to the shift register 31, or may be adjusted by the form (the thickness, the length, or the like) of a wiring between the output side of the first inverter 41A and the input side of the second inverter 41B. Similarly, the second load may be adjusted by the second capacitance element 52B, may be adjusted by the size of a second amplification element 51B connected to the dummy circuit D, or may be adjusted by a form of a wiring between the output side of the second inverter 41B and the input side of the first inverter 41A.

In this way, in the clock repeater circuit 32 of the present embodiment, the clock signal propagation circuit 40 and the load circuit 50 may be constituted such that the load of the first inverter 41A and the load of the second inverter 41B have an identical magnitude. However, in order to facilitate the configuration, circuit configurations of the non-inversion phase and the inversion phase can be preferably symmetrical. That is, the clock repeater circuit 32 can be preferably constituted such that each component satisfies at least the following condition.
(1) The size of the first inverter 41 A and the size of the second inverter 41 B are the same size.
(2) The wiring interval from the first inverter 41A to the second inverter 41B is the same as the wiring interval from the second inverter 41B to the first inverter 41A.
(3) The first capacitance element 52A and the second capacitance element 52B have an identical capacitance.
(4) The size of the first amplification element 51A connected to the shift register 31 and the size of the second amplification element 51B connected to the dummy circuit D are an identical size.

Although the embodiment of the present invention has been described, a correspondence relationship between the present invention and the above embodiment is described in a supplementary manner.
(1) In the embodiment described above, an image sensor 1 includes: a memory 23 that stores a signal which is read out from a pixel; a shift register 31 that transfers the signal stored in the memory 23 by a supplied clock signal; a clock signal propagation circuit 40 that propagates the clock signal via a plurality of inverters 41 connected in series to each other; and a load circuit 50 that matches a load of a first inverter 41A which supplies the clock signal to the shift register 31 among the plurality of inverters 41 with a load of a second inverter 41B which supplies the clock signal to the first inverter 41A among the plurality of inverters 41.
   According to the image sensor 1 having such a configuration, with respect to the difference between the rising edge and the falling edge of the clock signal, the tendency in which the difference is decreased and the tendency in which the difference is increased can be averaged, and therefore, it is possible to prevent the malfunction of the data bus circuit 30.
(2) Further, in the embodiment described above, the load circuit 50 can be configured to include a capacitance element having a capacitance that matches an output-side load of the first inverter 41A and an output-side load of the second inverter 41B.
(3) Further, in the embodiment described above, the load circuit 50 can be configured to include a first amplification element that amplifies an input to the shift register 31 on an output side of the first inverter 41A and include a second amplification element 51B that matches a load of the first amplification element on an output side of the second inverter 41B.
(4) Further, in the embodiment described above, the clock signal propagation circuit 40 can be configured such that each of the plurality of inverters 41 is connected to an adjacent inverter 41 at an equal interval.
   According to such a configuration, it is possible to cause the output-side load of the first inverter 41 A and the output-side load of the second inverter 41B to match each other, and a drive force of the rising edge and a drive force of the falling edge of the clock signal can be equalized.
(5) Further, in the embodiment described above, the clock signal propagation circuit 40 can be configured such that the plurality of inverters 41 are configured by inverters having an identical drive force.
   According to such a configuration, the drive force of the rising edge of the clock signal and the drive force of the falling edge can be equalized, and the configuration of a partial circuit of a non-inversion phase and the configuration of a partial circuit of an inversion phase can be made identical.
(6) Further, in the embodiment described above, the clock signal propagation circuit 40 can be configured such that the plurality of inverters 41 are configured by inverters having a finger number of several fingers to more than ten fingers.
   According to such a configuration, it is possible to decrease the circuit scale while preventing the malfunction of the data bus circuit 30.
(7) Further, in the embodiment described above, the clock signal propagation circuit 40 and the load circuit 50 can be configured such that a partial circuit of a non-inversion phase having the first inverter 41 A and a partial circuit of an inversion phase having the second inverter 41B have an identical configuration.

According to such a configuration, the clock signal propagation circuit 40 can be configured by repeating the partial circuit having an identical configuration, and therefore, the image sensor 1 can be configured further easily while preventing the malfunction of the data bus circuit 30.

In the above embodiment, an example of the hybrid method is described as a method of AD conversion; however, each circuit configuration described above does not necessarily require that the method of the AD conversion of the pixel unit circuit 20 is the hybrid method. For example, each circuit configuration described above can be also applied to the case where AD conversion result data is read from the pixel unit circuit 20 that performs AD conversion by the SS method which does not store the reset number and can be also applied to the case where AD conversion result data is read from the pixel unit circuit 20 that performs AD conversion by the PFM method which stores the reset number.

Although the embodiment of this invention has been described in detail with reference to the drawings, a specific configuration is not limited to the configurations described above, and various design changes and the like can be made without departing from the scope of this invention.

### DESCRIPTION OF THE REFERENCE SYMBOLS

1...image sensor, 11...pixel array, 12...peripheral circuit, 20...pixel unit circuit, 21...ADC, 22... control circuit, 23... memory, 30... data bus circuit, 31...shift register, 32...clock repeater circuit, 33...D flip-flop circuit, 40... clock signal propagation circuit, 41...inverter, 41A...first inverter, 41B...second inverter, 50...load circuit, 51A...first amplification element, 51B...second amplification element, 52A...first capacitance element, 52B...second capacitance element, 90... clock repeater circuit, 91...inverter, 91A...first inverter, 91B...second inverter, 92...D flip-flop circuit, 93... capacitance element

## Claims

1. An image sensor comprising:
a storage unit that stores a signal which is read out from a pixel;
a shift register that transfers the signal stored in the storage unit by a supplied clock signal;
a clock signal propagation circuit that propagates the clock signal via a plurality of inverters connected in series to each other; and
a load circuit that matches a load of a first inverter which supplies the clock signal to the shift register among the plurality of inverters with a load of a second inverter which supplies the clock signal to the first inverter among the plurality of inverters.

2. The image sensor according to claim 1,
wherein the load circuit includes a capacitance element having a capacitance that matches an output-side load of the first inverter and an output-side load of the second inverter.

3. The image sensor according to claim 1,
wherein the load circuit
includes a first amplification element that amplifies an input to the shift register on an output side of the first inverter and
includes a second amplification element that matches a load of the first amplification element on an output side of the second inverter.

4. The image sensor according to claim 1,
wherein in the clock signal propagation circuit, each of the plurality of inverters is connected to an adjacent inverter at an equal interval.

5. The image sensor according to claim 1,
wherein in the clock signal propagation circuit, the plurality of inverters are configured by inverters having an identical drive force.

6. The image sensor according to claim 5,
wherein in the clock signal propagation circuit, the plurality of inverters are configured by inverters having a finger number of several fingers to more than ten fingers.

7. The image sensor according to claim 1,
wherein the clock signal propagation circuit and the load circuit are configured such that a partial circuit of a non-inversion phase having the first inverter and a partial circuit of an inversion phase having the second inverter have an identical configuration.
